# EUROPEAN PATENT SPECIFICATION

(11) **EP 3 412 969 B1**
(45) Date of publication and mention of the grant of the patent: **09.12.2020**
(21) Application number: 17747292.5
(22) Date of filing: 26.01.2017
(51) Int. Cl.: F23G 5/50, F23G 5/46, F23G 7/00, F23M 5/08

(54) **MELTING SYSTEM AND METHOD FOR CONTROLLING MELTING SYSTEM**
SCHMELZSYSTEM UND VERFAHREN ZUR STEUERUNG DES SCHMELZSYSTEMS
SYSTÈME DE FUSION ET PROCÉDÉ DE COMMANDE DE SYSTÈME DE FUSION

(30) Priority: 02.02.2016 JP 2016017864
(43) Date of publication of application: 12.12.2018
(73) Proprietor: Kubota Corporation, Osaka-shi, Osaka 556-8601 (JP)
(72) Inventor: HOSHO Fumiki, Amagasaki-shi Hyogo 661-8567 (JP); YOSHIOKA Youji, Amagasaki-shi Hyogo 661-8567 (JP); KAMBAYASHI Fumiaki, Amagasaki-shi Hyogo 661-8567 (JP)
(74) Representative: Betten & Resch
(86) International application number: PCT/JP2017/002668
(87) International publication number: WO 2017/135134

(56) References cited:
- JP-A- S 576 223
- JP-A- S5 618 213
- JP-A- H09 101 023
- JP-A- 2001 121 125
- JP-A- 2001 241 631
- JP-A- 2002 372 219
- JP-A- 2002 372 219
- JP-A- 2011 206 696
- US-A- 4 467 732

## Description

### [FIELD OF THE INVENTION]

The present invention relates to a melting system including a melting furnace and an exhaust gas treatment apparatus configured to purify exhaust gas from the melting furnace, and a method for controlling the melting system.

### [DESCRIPTION OF THE RELATED ART]

Melting furnaces are used for melting treatment targets such as waste and reducing the volume of the treatment targets. The melt treatment is a high-temperature process in which the treatment targets are melted at about 1250 to 1400°C, and many heat recovery processes have been proposed.

For example, a shell-and-tube heat exchanger is provided in a flue to recover heat from exhaust gas having a high temperature of about 850 to 900°C that flows out of the furnace main body into the flue, so that 40 to 45% of the heat input to the furnace is recovered. The heat is efficiently recovered by utilizing a large temperature gradient between a heat-radiating medium and a heat-receiving medium. The heat recovered by the heat exchanger in such a high temperature range is used to heat combustion air to be supplied to the furnace main body or to heat boiler water.

A water-cooling jacket is also provided on a metal casing covering the furnace main body to avoid burn damage to the furnace main body. Cooling water is led into the water-cooling jacket and heated to a high temperature, dissipates heat in a cooling tower, and returns to the water-cooling jacket. In order to cool the furnace main body, 20 to 25% of the heat input to the furnace is lost. Exhaust gas emitted from a chimney retains 10% of the heat input to the furnace.

Patent document 1 proposes a heat recovery method and its heat recovery system in an ash-melting furnace for utilizing heat that is absorbed by cooling water when cooling the ash-melting furnace attached to a garbage incinerator.

The heat recovery method includes supplying cooling water to a water-cooled wall provided on at least part of an ash-melting furnace attached to a garbage incinerator to cool the ash-melting furnace, and heating water to be fed into a boiler provided on the garbage incinerator or heating and deaerating the water to be fed into the boiler by using sensible heat and/or latent heat of the cooling water.

US 4 467 732 A relates to a melting apparatus that has a low temperature melting portion, an exhaust gas cooling portion, and a dust collecting portion which are arranged, in succession, in an exhaust gas duct of a melting furnace . A low boiling point dust collected in the dust collecting portion is returned to the low temperature melting portion for melting by retention heat of an exhaust gas flowing into the exhaust gas duct.

JP 2002 372219 A relates to a processing apparatus for waste gas and its method in which waste gas from a melting furnace 5 for melting a waste is flowed through a plurality of stages of indirect heat exchangers 7 to 10 connected in series via waste gas communication passages 70, 71, and 72, and waste heat of waste gas is recovered by dividing the operation into a plurality of steps. Thereupon, the waste gas communication passage 70 connecting at least the uppermost stream heat exchanger 7 and the next stage heat exchanger 8 is formed to include dust capture spaces 70S, 70S where a waste gas flow speed flowing the inside is lower than that in the uppermost stream heat exchanger 7.

### [PRIOR ART DOCUMENT]

### [PATENT DOCUMENT]

[Patent document 1] Japanese Unexamined Patent Application Publication No. 2001-241631
[Patent document 2] US 4 467 732 A
[Patent document 3] JP 2002 372219 A

### [SUMMARY OF INVENTION]

### [PROBLEMS TO BE SOLVED BY THE INVENTION]

However, the technique disclosed in Patent document 1 requires an ash-melting furnace attached to a garbage incinerator provided with a boiler. Hence, there is the problem that its applicability is limited. There is also the problem that boiling of the cooling water supplied to the water-cooled wall impairs the circulation of the cooling water in the water-cooled wall and exposes the furnace wall to extraordinarily high temperatures, and there has been room for further improvement in view of the heat recovery efficiency.

Similarly, waste heat of exhaust gas has not been recovered in a low temperature range of about 140 to 200°C, which is the temperature range on, for example, the downstream side of an exhaust gas treatment apparatus. In other words, 50% or more of the heat input to the melting furnace has been uselessly discharged without being effectively utilized.

By the way, to melt, in a melting furnace, sludge having a moisture content of 70 to 80% generated by sewage disposal or the like, the sludge is required to be dried in advance to a moisture content of 10 to 30% using a dryer. However, in a conventional exhaust heat recovery process utilizing heat recovery in the high temperature range, the amount of recovered heat cannot cover the amount of heat required by the dryer, and auxiliary fuel has been required separately. In other words, improvement of the exhaust heat recovery process has been desirable not only in view of the problem that greenhouse gases are generated but also in view of economic efficiency.

In view of the above problems, the present invention has an object to provide a melting system that suppresses generation of greenhouse gases and contributes to economic efficiency by increasing exhaust heat recovery efficiency, and a method for controlling the melting system.

### [MEANS FOR SOLVING THE PROBLEMS]

To achieve the above object, a first characteristic configuration of a melting system according to the present invention is described in claim 1.

Since the heat medium is circulated among the first and second heat recovery units and the heat utilizing facility through the circulation passage and since the recovery heat amount adjusting mechanism adjusts the amount of heat to be recovered by each heat recovery unit, even heat recovered by heat exchange in the low temperature range can be effectively and stably utilized using a heat medium available in that temperature zone.

A second characteristic configuration of the melting system is described in claim 2.

The high-temperature heat exchanger enables the heat exchange in the high temperature range in addition to the heat exchange in the low temperature range, and the recovered heat can be more stably utilized.

A third characteristic configuration of the melting system is that, as described in claim 3 in the appended claims, in addition to the first or second characteristic configuration, the melting system may further include a heat medium storage unit in the circulation passage, the heat medium storage unit being configured to temporarily store the heat medium.

Even in the case where the amount of the heat medium is too much or too little, storing an excess of the heat medium in the heat medium storage unit enables the recovered heat to be more stably utilized.

A fifth characteristic configuration of the melting system is that, as described in claim 5 in the appended claims, in addition to the fourth characteristic configuration, the heat utilizing facility may include a treatment target dryer configured to dry a treatment target to be melted in the melting furnace.

If the treatment target dryer for drying the treatment target is provided as the heat utilizing facility, even sludge having a high moisture content can be dried using the recovered heat, thereby reducing the amount of fossil fuels, which leads to generation of greenhouse gases, to be used.

A fourth fifth characteristic configuration of the melting system is that, as described in claim 4 in the appended claims, in addition to any of the first to third characteristic configurations, the melting system may further include a heat source apparatus configured to supply heat to the heat medium or dissipate heat of the heat medium.

The heat source apparatus stabilizes the amount of heat retained by the heat medium even in the case where the amount of heat recovered by the heat recovery units is not sufficient.

A sixth characteristic configuration of the melting system is that, as described in claim 6 in the appended claims, in addition to the fourth characteristic configuration, the treatment target dryer may be a facility configured to dry sludge generated in a wastewater treatment facility configured to treat wastewater and subjected to solid-liquid separation, and that the heat source apparatus may be a combustor configured to burn combustible gas as fuel generated in the wastewater treatment facility.

Sludge having a high moisture content can be effectively dried in the treatment target dryer. When the amount of heat recovered by the heat medium is too little, the deficiency in the amount of heat can be made up by allowing the combustor to burn the carbon-neutral combustible gas generated in the wastewater treatment facility.

A seventh characteristic configuration of the melting system is that, as described in claim 7 in the appended claims, in addition to the sixth characteristic configuration, the heat source apparatus may include a drying heat exchanger employing, as a heating source, exhaust gas from the combustor configured to burn the combustible gas as fuel generated in the wastewater treatment facility.

The deficiency in the amount of heat in the heat utilizing facility can be made up by utilizing the heat retained by the exhaust gas from the combustor that burns the combustible gas.

An eighth characteristic configuration of the melting system is that, as described in claim 8 in the appended claims, in addition to the fourth characteristic configuration, the treatment target dryer may be a facility configured to dry sludge generated in a wastewater treatment facility configured to treat wastewater and subjected to solid-liquid separation, and that the melting furnace may be configured to burn combustible gas as fuel generated in the wastewater treatment facility.

When organic sludge is melted in the melting furnace, the melt treatment can be performed using the heat generated by combustion of the sludge. In the case where the amount of heat is not enough to perform the melt treatment at this time, the amount of greenhouse gases generated can be reduced by using the carbon-neutral combustible gas.

A ninth characteristic configuration of the melting system is that, as described in claim 9 in the appended claims, in addition to any of the first to eighth characteristic configurations, the melting system may further include a fourth heat recovery unit configured to supply combustion air for the melting furnace to a high-temperature heat exchanger between the melting furnace and the exhaust gas treatment apparatus to preheat the combustion air, and that the combustion air preheated in the fourth heat recovery unit may be supplied to the melting furnace.

Since the fourth heat recovery unit provided on the high-temperature heat exchanger between the melting furnace and the exhaust gas treatment apparatus preheats the combustion air, the melt treatment can be performed more stably.

A tenth characteristic configuration of the melting system is that, as described in claim 10 in the appended claims, in addition to any of the first to ninth characteristic configurations, a liquid may be used as the heat medium, and that the amount of heat to be recovered by each of the heat recovery units may be adjusted so that a temperature of the heat medium after heat recovery will be lower than a boiling point of the liquid.

Since the heat medium is kept in the liquid state during the heat exchange, the flows of the heat medium in the heat recovery units are stabilized.

A first characteristic configuration of a method for controlling a melting system according to the present invention is described in claim 11.

Since heat is sufficiently recovered by the first heat recovery unit, the melting system is stably operated without burn damage to the furnace wall.

A second characteristic configuration of the method for controlling a melting system is that, as described in claim 12 in the appended claims, in addition to the first characteristic configuration, a liquid may be used as the heat medium, and that an amount of heat to be recovered by each of the heat recovery units may be adjusted so that a temperature of the heat medium after heat recovery will be lower than a boiling point of the liquid.

Since the heat medium is not vaporized in the first heat recovery unit, a stable flow of the heat medium in the first heat recovery unit is ensured. Hence, partial burn damage to the furnace wall caused by obstruction of the flow is also avoided.

A third characteristic configuration of the method for controlling a melting system is that, as described in claim 13 in the appended claims, in addition to the first or second characteristic configuration, the flow rate of the heat medium supplied to each of the heat recovery units may be adjusted so that an amount of heat to be recovered by the heat medium will be equal to an amount of heat required in the heat utilizing facility.

A fourth characteristic configuration of the method for controlling a melting system is that, as described in claim 14 in the appended claims, in addition to the first to third characteristic configurations, the melting system may further include a third heat recovery unit configured to recover heat by supplying the heat medium to a high-temperature heat exchanger between the melting furnace and the exhaust gas treatment apparatus, and that the flow rate of the heat medium supplied to each of the heat recovery units may be adjusted so that an amount of heat to be recovered by the heat medium will be equal to an amount of heat required in the heat utilizing facility.

A fifth characteristic configuration of the method for controlling a melting system is described in claim 15.

A sixth characteristic configuration of the method for controlling a melting system is that, as described in claim 16 in the appended claims, in addition to any of the first to fifth characteristic configurations, the melting system may further include a heat source apparatus configured to supply heat to the heat medium or dissipate heat of the heat medium, and that the heat source apparatus may be controlled so that an amount of heat required in the heat utilizing facility will be supplied in a case where an amount of heat supplied is more or less than the amount of heat required in the heat utilizing facility.

A seventh characteristic configuration of the method for controlling a melting system is that, as described in claim 17 in the appended claims, in addition to the sixth characteristic configuration, the melting facility may be configured to melt sludge generated in a wastewater treatment facility configured to treat wastewater and subjected to solid-liquid separation, the heat utilizing facility may comprise a sludge dryer being provided with a combustor configured to burn combustible gas as fuel generated in the wastewater treatment facility, and the combustor may function as the heat source apparatus, and that the combustor will be ignited as a drying heat source in a case where an amount of heat to be recovered by the heat recovery units is less than the amount of heat required in the heat utilizing facility.

### [EFFECTS OF INVENTION]

As described above, the present invention can provide a melting system that suppresses generation of greenhouse gases and contributes to economic efficiency by increasing exhaust heat recovery efficiency, and a method for controlling the melting system.

### [BRIEF DESCRIPTION OF THE DRAWINGS]

[Fig. 1] Fig. 1 is a diagram illustrating a melting system according to the present invention.
[Fig. 2] Fig. 2 is a diagram illustrating a melting furnace.
[Fig. 3] Fig. 3 is a diagram illustrating another mode of the melting system according to the present invention.
[Fig. 4] Fig. 4 is a diagram illustrating still another mode of the melting system according to the present invention.

### [DESCRIPTION OF THE PREFERRED EMBODIMENTS]

The following describes embodiments of a melting system and a method for controlling the melting system according to the present invention.

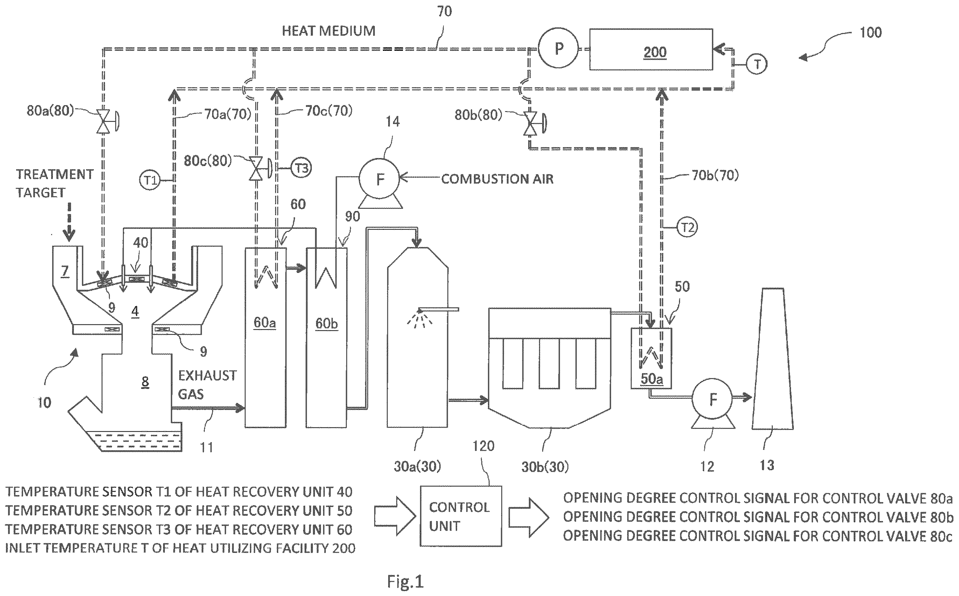

As shown in Fig. 1, a melting system 100 includes a melting furnace 10 and exhaust gas treatment apparatuses 30 that purify exhaust gas from the melting furnace 10. A rotary surface melting furnace 10 is used as the melting furnace 10 in the present embodiment. The target of the present invention is not limited to the rotary surface melting furnace 10. The present invention is also applicable to other types of melting furnaces such as electric surface melting furnaces and surface melting furnaces utilizing fuel.

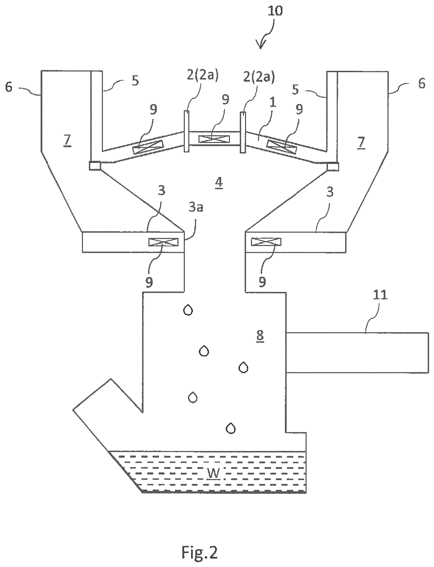

Fig. 2 shows a specific structure of the rotary surface melting furnace 10. The rotary surface melting furnace 10 includes a furnace chamber 4 constituted of a furnace ceiling 1 and a furnace bottom 3 having a slag port 3a in its central part. Auxiliary burners 2 provided with air supply mechanisms 2a are disposed in the central part of the furnace ceiling 1. A treatment-target container 7 communicating with the furnace chamber 4 is disposed around the furnace chamber 4.

In the present embodiment, wet particles are put in the treatment-target container 7 and subjected to the melt treatment. The wet particles include sludge generated in a wastewater treatment facility for treating various types of wastewater including organic sludge generated by the biological treatment of sewage or various types of food processing, and incineration ash generated in garbage incinerators.

An inner cylinder 5 formed around the furnace ceiling 1 integrally with the furnace ceiling 1 and an outer cylinder 6 formed around the furnace bottom 3 integrally with the furnace bottom 3 are concentrically arranged. The annular treatment-target container 7 is formed between the inner cylinder 5 and the outer cylinder 6.

While not shown in the drawings, the treatment-target container 7 is provided with an upper cover, a hopper provided with a double damper mechanism is disposed on the upper part of the upper cover, and a treatment target is fed by a conveyor. The gap between the upper cover and the outer cylinder 6 is water-sealed.

The treatment target contained in the treatment-target container 7 is cut out by a cutout blade 5a disposed on the lower part of the inner cylinder 5 and is fed into the furnace chamber 4 such that the treatment target forms a bowl shape by utilizing relative rotation between the outer cylinder 6, which is rotationally driven by a drive mechanism disposed on the lower part of the outer cylinder 6, and the inner cylinder 5, which does not rotate.

The treatment target cut out and fed into the furnace chamber 4 is melted from its surface by the heat of the auxiliary burners 2 and falls into a water tank W below from the slag port 3a formed on the furnace bottom 3. A secondary combustion chamber 8 is disposed below the slag port 3a. Combustion gas is discharged through a flue 11 laterally extending from a side wall of the secondary combustion chamber 8.

Refractory walls made by stacking firebricks or the like constitute the furnace ceiling 1, the furnace bottom 3, the inner cylinder 5, and the outer cylinder 6. A water-cooling jacket 9 made of metal is disposed on the furnace ceiling 1, the furnace bottom 3, and the furnace walls near the furnace bottom 3 around the slag port to cover the furnace walls (refractory walls) in the furnace chamber 4 from the outside, so that heat can be recovered.

Referring back to Fig. 1, exhaust gas treatment facilities 30 such as a temperature-reducing tower 30a and a bag filter 30b are disposed along the flue 11, and purified exhaust gas is induced by an induced draft fan 12 and discharged through a chimney 13.

The melting system 100 further includes a first heat recovery unit 40, a second heat recovery unit 50, a third heat recovery unit 60, and circulation passages 70 (70a, 70b, and 70c) through which the heat medium used for recovering heat by the first heat recovery unit 40, the second heat recovery unit 50, and the third heat recovery unit 60 is circulated and supplied to a heat utilizing facility 200.

In the present embodiment, water at normal pressure is used as the heat medium, and a facility that can utilize heat or heated water, such as a treatment target dryer for drying wet treatment targets, a heater, a heated pool, a greenhouse, and a binary power generator, can be used as the heat utilizing facility 200.

The first heat recovery unit 40 recovers heat by supplying the heat medium to a cooling mechanism constituted of the water-cooling jacket 9 for cooling the furnace walls that partition the furnace chamber in which the melt treatment is performed at 1250 to 1400°C. The second heat recovery unit 50 is disposed downstream from the exhaust gas treatment apparatuses 30 and recovers heat by supplying the heat medium to a low-temperature heat exchanger 50a through which exhaust gas having a decreased temperature as low as 140 to 200°C passes. The third heat recovery unit 60 is disposed between the melting furnace 10 and the exhaust gas treatment apparatuses 30 and recovers heat by supplying the heat medium to a high-temperature heat exchanger 60a through which exhaust gas having a high temperature of 800 to 900°C passes.

Needless to say, the first heat recovery unit 40 that cools the furnace walls can recover heat not only from the water-cooling jacket on the furnace ceiling 1 but also from any or all of a cooling passage on the furnace bottom 3, a cooling passage on side walls of the secondary combustion chamber 8, and a cooling passage around the slag port.

Recovery heat amount adjusting mechanisms 80 (80a, 80b, and 80c) that adjust the amount of heat to be recovered by the heat recovery units 40, 50, and 60 and to be supplied to the heat utilizing facility 200 are disposed. Specifically, the control valve 80a that adjusts the amount of the heat medium to be supplied to the first heat recovery unit 40, the control valve 80b that adjusts the amount of the heat medium to be supplied to the second heat recovery unit 50, and the control valve 80c that adjusts the amount of the heat medium to be supplied to the third heat recovery unit 60 are included.

A control unit 120 determines the temperature of the heat medium supplied to the heat utilizing facility 200 and adjusts the degrees of opening of the control valves 80a, 80b, 80c so that a target temperature will be achieved on the basis of input signals from temperature sensors T1, T2, and T3 disposed on the outlet portions of the heat recovery units 40, 50, and 60 and a temperature sensor T disposed on the inlet portion of the heat utilizing facility 200. The control unit can be constituted by installing a program that performs the above control on a general-purpose computer in which a general-purpose motherboard is connected to a memory board via a bus, or can be constituted of a dedicated computer.

In other words, the heat medium supplied to the heat utilizing facility 200 dissipates heat in the heat utilizing facility 200 and is then supplied to the circulation passages 70 by a pump, and the recovery heat amount adjusting mechanisms 80 (80a, 80b, and 80c) adjust the amounts of the heat medium to be supplied to the heat recovery units 40, 50, and 60 to adjust the amount of heat to be recovered by each of the heat recovery units 40, 50, and 60.

Accordingly, the heat medium discharged from the heat utilizing facility 200 at about 75°C is heated to about 90°C in the corresponding heat recovery unit 40, 50, or 60 and supplied to the heat utilizing facility 200. In other words, the amount of heat to be recovered by each of the heat recovery units 40, 50, and 60 is adjusted so that the temperature of the heat medium after the heat recovery will be lower than the boiling point of water, and the heat medium is kept in the liquid state during the heat exchange, so that the flows of the heat medium in the heat recovery units are stabilized.

In particular, if the heat medium (water) boils within a passage constituting the water-cooling jacket 9, the flow of the heat medium is obstructed by a gas (vapor), and the failure in cooling makes the furnace walls to locally have extraordinarily high temperatures, resulting in damage to the refractory walls. However, since the heat medium is kept in the liquid state during the heat exchange, the furnace walls are prevented from having extraordinarily high temperatures. Accordingly, damage to the furnace walls (refractory) is prevented.

In other words, the recovery heat amount adjusting mechanisms are configured to adjust and control the amounts of the heat medium to be supplied on the basis of the amounts of heat to be recovered by the heat recovery units, the amount of heat used in the heat utilizing facility, and the temperatures of the heat medium and exhaust gas at the outlets of the heat recovery units. The illustrative configuration in which the temperature is raised to about 90°C by each of the heat recovery units 40, 50, and 60 has been described in the present embodiment, but the temperatures achieved by heat recovery may differ between the heat recovery units 40, 50, and 60 and may be adjusted so that the combination of the temperatures will result in a temperature of about 90°C, which is required in the heat utilizing facility.

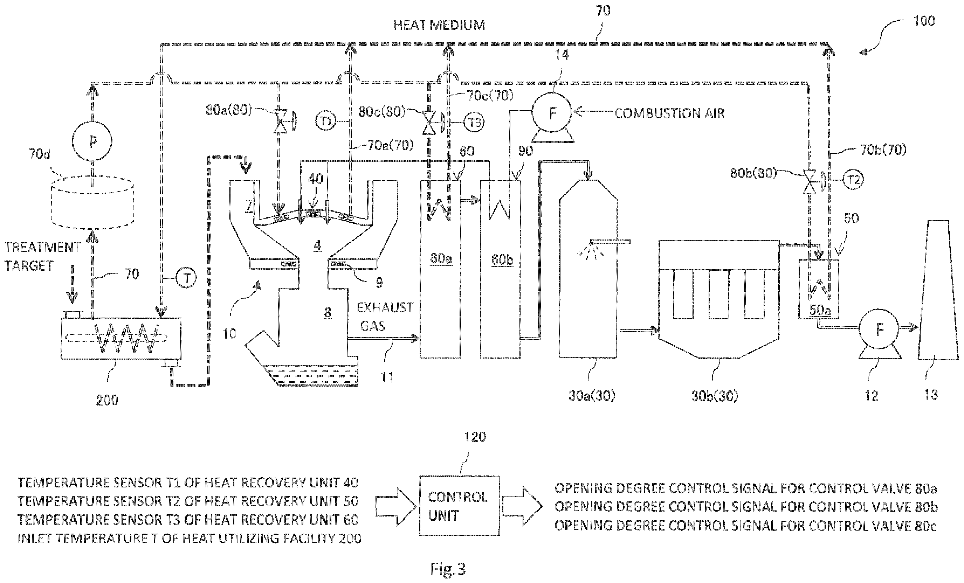

Fig. 3 shows the case where a sludge dryer is used as an example of the treatment target dryer, which is the heat utilizing facility 200. The sludge dryer is provided with a plurality of stages of conveyor mechanisms for conveying sludge into a casing, and sludge having a moisture content of 70 to 80% fed through a feed port of the casing is heated by the heat medium at about 90°C so as to be dried to a moisture content of 10 to 30% and is discharged through a discharge port formed on the bottom surface of the casing. Examples of the sludge include wet ash generated in garbage incinerators and sludge generated in wastewater treatment facilities for treating wastewater, particularly organic sludge generated in biological treatment facilities for biologically treating organic wastewater and subjected to solid-liquid separation and organic sludge generated by various types of food processing.

If the sludge dryer is provided as the heat utilizing facility, even sludge having a high moisture content can be dried using the heat recovered in the melting system, and the amount of fossil fuels, which lead to generation of greenhouse gases, to be used can be reduced.

As described above, the sludge discharged from the sludge dryer is fed into the hopper by the conveyor and fed into the treatment-target container 7 through the double damper mechanism.

High-temperature heat exchangers 60a and 60b are connected in series between the melting furnace 10 and the exhaust gas treatment apparatus (temperature-reducing tower 30a). The high-temperature heat exchanger 60a on the upstream side constitutes the third heat recovery unit 60 that heats the above heat medium. The high-temperature heat exchanger 60b on the downstream side constitutes a fourth heat recovery unit 90 that preheats the combustion air to be fed into the furnace by a forced draft fan 14 from normal temperature (about 30°) to about 250°C. The first to fourth heat exchangers recover 65 to 80% of the heat input to the melting furnace 10. The heat input to the melting furnace is the sum of the amount of heat (lower heating value) of the treatment target fed into the melting furnace and the amount of heat of the fuel and the combustion air fed into the auxiliary burners.

Since the fourth heat recovery unit 90 constituted of the above high-temperature heat exchanger 60b preheats the combustion air to a temperature required for accelerating combustion of the treatment target in the melting furnace, melting is performed in the furnace more stably, and the amount of the auxiliary fuel to be used can be further reduced. Since the combustion air is also used for combustion in the burners 2, preheating the combustion air can reduce the amount of the auxiliary fuel to be used.

As indicated by dashed lines in Fig. 3, a heat medium storage unit 70d that temporarily stores the heat medium may be disposed in the circulation passages 70. Storing an excess of the heat medium in the heat medium storage unit 70d allows the recovered heat to be more stably utilized even in the case where the amount of the heat medium is more or less than the amount of the heat medium required in the heat recovery units 40, 50, and 60. The heat medium storage unit 70d also stores the amount of heat recovered and supplied so as to accommodate imbalance between recovery and utilization of heat, thereby enabling stable operation. The heat medium storage unit 70d may be disposed anywhere in the circulation passages.

To prepare for the case where a sufficient amount of heat cannot be supplied to the heat utilizing facility 200 due to changes in the state of combustion in the melting furnace 10, it is preferable that a heat source apparatus for supplying heat to the heat medium be included. Examples of the heat source apparatus include the burners 2 on the furnace ceiling, a hot-water boiler, a heating burner, an electric heater, and heated water supplied from a binary power generator. On the other hand, when dissipation of heat from the heat medium is required, a cooling tower, a chiller unit, or a temperature-reducing tower, which is one of the exhaust gas treatment facilities, can be used as the heat source apparatus.

In the case where such a melting system 100 is attached to a biological treatment facility (wastewater treatment facility) for biologically treating organic wastewater and where the heat utilizing facility 200 is a sludge dryer for drying organic sludge generated by the biological treatment (wastewater treatment) and subjected to solid-liquid separation, a combustor that bums combustible gas as fuel generated in the biological treatment facility can constitute the heat source apparatus. Specifically, gases such as methane gas generated by the anaerobic treatment of the organic wastewater in a digester provided in the biological treatment facility can be effectively utilized as the combustible gas.

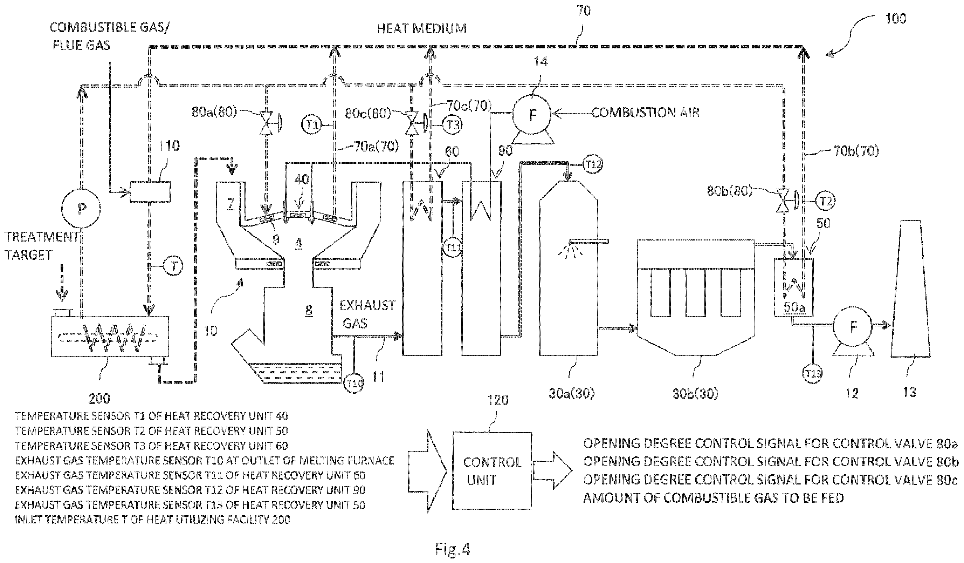

Fig. 4 shows an example in which a combustor 110 is disposed, in the circulation passages 70 of the heat medium, downstream from the confluences of the heat medium used for recovering heat by the heat recovery units 40, 50, and 60.

The control unit 120 determines the temperature of the heat medium supplied to the heat utilizing facility 200 and the temperature of the exhaust gas and adjusts the degrees of opening of the control valves 80a, 80b, and 80c and the amount of the combustible gas to be fed into the combustor 110 so that target temperatures of the heat medium and the exhaust gas will be achieved on the basis of input signals from temperature sensors T1, T2, T3, T10, T11, T12, and T13 disposed on the outlet portions of the heat recovery units 40, 50, 60, and 90 and the exhaust-gas outlet portions of the heat recovery units 40, 50, 60, and 90 from the hot-melting furnace 10, and the temperature sensor T disposed on the inlet portion of the heat utilizing facility 200.

This constitution enables the deficiency in the amount of heat to be made up by allowing the combustor to burn the carbon-neutral combustible gas generated in the biological treatment facility even when the heat recovery units 40, 50, and 60 cannot recover a sufficient amount of heat.

A drying heat exchanger employing, as a heating source, exhaust gas from the combustor that burns the combustible gas as fuel generated in the biological treatment facility may constitute the heat source apparatus 110. For example, electricity is generated using, as the combustor, a gas turbine that bums the combustible gas, and the heat medium is heated by exhaust gas having a high temperature discharged from the gas turbine.

In the melting system 100 attached to the biological treatment facility, the combustible gas generated in the biological treatment facility can also be used as the fuel to be fed into the auxiliary burners 2 of the melting furnace 10.

When organic sludge is melted in the melting furnace, the melt treatment can be performed using the heat generated by combustion of the organic sludge. In the case where the amount of heat generated only by the combustion of the organic sludge is not enough to perform the melt treatment, the amount of greenhouse gases generated can be reduced by using the carbon-neutral combustible gas.

The illustrative configuration including the third heat recovery unit 60 that recover heat by supplying the heat medium to the high-temperature heat exchanger between the melting furnace and the exhaust gas treatment apparatuses in addition to the first and second low-temperature heat recovery units 40 and 50 has been described in the above embodiment. However, heat recovered only by the first and second low-temperature heat recovery units 40 and 50 may be circulated into the heat utilizing facility 200 without employing the third heat recovery unit. In this case, a third heat recovery unit 60 utilizing a heat medium different from the heat medium circulated through the low-temperature heat recovery units may be further included, and the recovered heat may be circulated into another heat utilizing facility 200. In other words, the third heat recovery unit 60 may be configured to recover heat at higher temperatures than the temperatures in the low-temperature heat recovery units 40 and 50.

The illustrative configuration in which water at normal pressure is used as the heat medium and in which the amount of heat to be recovered by the heat recovery units 40, 50, and 60 is adjusted so that the temperature of the heat medium after heat recovery will be 90°C, which is lower than the boiling point of water, has been described in the above embodiment. However, heating to a temperature equal to or higher than the boiling point of water is possible under the condition that the heat recovery units 40, 50, and 60 and equipment of the melting system work without trouble. In addition, it is also possible to use pressurized water having a boiling point equal to or higher than 100°C produced by applying pressure to the circulation passages. Furthermore, a liquid, such as oil, other than water or a gas, such as air and vapors, can be used as the heat medium. In other words, in the case where heat generated in the melting system and to be discarded is recovered, a melting system with high heat recovery efficiency is achieved by selecting an available medium and temperature range, which are limited by the heat utilizing facility 200, to cool the melting furnace.

As described above, a method for controlling a melting system according to the present invention includes, in the melting system that includes a melting facility including a melting furnace and an exhaust gas treatment apparatus configured to purify exhaust gas from the melting furnace; a first heat recovery unit configured to recover heat by supplying a heat medium to a cooling mechanism configured to cool a furnace wall; a second heat recovery unit configured to recover heat by supplying the heat medium to a low-temperature heat exchanger disposed downstream from the exhaust gas treatment apparatus; and a circulation passage through which the heat medium used for recovering heat by the first heat recovery unit and the second heat recovery unit is circulated and supplied to a heat utilizing facility, adjusting a flow rate of the heat medium supplied to each of the heat recovery units so that an amount of heat to be recovered by the first heat recovery unit will be equal to or more than an amount of recovered heat required for cooling the melting furnace. In this method for controlling a melting system, heat is sufficiently recovered by the first heat recovery unit to prevent the furnace wall from having an extraordinarily high temperature. In other words, the melting system is stably operated since the temperature is controlled so that burn damage to the furnace wall will be prevented.

At this time, it is preferable that a liquid be used as the heat medium and that the amount of heat recovered by each of the heat recovery units be adjusted so that the temperature of the heat medium after heat recovery will be lower than the boiling point of the liquid. Since the heat medium is not vaporized in the first heat recovery unit, a clogging of the passage caused by a vaporized heat medium does not occur, and a stable flow of the heat medium in the first heat recovery unit is ensured. Hence, insufficient cooling of the furnace wall caused by obstruction of the flow of the heat medium is prevented, and partial burn damage to the furnace wall is avoided.

It is preferable that the flow rate of the heat medium supplied to each of the heat recovery units be adjusted so that an amount of heat to be recovered by the heat medium will be equal to an amount of heat required in the heat utilizing facility.

It is preferable that the melting system further include a third heat recovery unit configured to recover heat by supplying the heat medium to a high-temperature heat exchanger between the melting furnace and the exhaust gas treatment apparatus, and that the flow rate of the heat medium supplied to each of the heat recovery units including the third heat recovery unit be adjusted so that an amount of heat to be recovered by the heat medium will be equal to an amount of heat required in the heat utilizing facility.

It is also preferable that the melting system further include a fourth heat recovery unit configured to supply combustion air for the melting furnace to the high-temperature heat exchanger between the melting furnace and the exhaust gas treatment apparatus to preheat the combustion air, and that a flow rate of the heat medium supplied to the heat recovery units including the fourth heat recovery unit be adjusted so that the combustion air preheated in the fourth heat recovery unit will have a temperature required for melting in the melting furnace; in other words, so that the preheated temperature will be a temperature required for accelerating combustion in the melting furnace.

It is preferable that the melting system further include a heat source apparatus configured to supply heat to the heat medium or dissipate heat of the heat medium, and that the heat source apparatus be controlled so that an amount of recovered heat required in each of the heat recovery units will be achieved and so that an amount of heat required in the heat utilizing facility will be supplied in a case where an amount of heat supplied is more or less than the amount of heat required in the heat utilizing facility.

It is preferable that the melting facility be configured to melt sludge generated in a wastewater treatment facility configured to treat wastewater and subjected to solid-liquid separation, the heat utilizing facility comprise a sludge dryer being provided with a combustor configured to burn combustible gas as fuel generated in the wastewater treatment facility, and the combustor function as the heat source apparatus, and that the combustor be ignited as a drying heat source in a case where an amount of heat to be recovered by the heat recovery units is less than the amount of heat required in the heat utilizing facility.

Although the treatment target dryer has been described as the heat utilizing facility in the above example, the heat utilizing facility may be any facility that utilizes heat, such as a heater, a heated pool, and a greenhouse, and a plurality of facilities with different conditions such as temperatures required may constitute the heat utilizing facility.

Although the temperature-reducing tower and the bag filter constitute the exhaust gas treatment apparatus in the above example, other apparatuses such as a wet or dry scrubber and a catalytic denitrification apparatus may be included. In such a case where a plurality of apparatuses are included, the second heat recovery unit is only required to be located downstream from any of the apparatuses. For example, in the case where the exhaust gas treatment facilities include a temperature-reducing tower, a bag filter, and a wet scrubber, it is preferable that the second heat recovery unit be disposed between the bag filter and the wet scrubber in consideration of the temperature of the exhaust gas. Also, it is preferable that the second heat recovery unit be disposed downstream from an apparatus for neutralizing acid gases in consideration of corrosion by the acid gases.

Organic sludge and wet sludge have been took as examples of the treatment target in the above example, but the treatment target may be any material that can be combusted or melted, such as dry incineration ash, fly ash, waste plastics, and garbage.

## Claims

1. A melting system comprising:
a melting furnace (10) used for melting treatment targets such as waste and reducing the volume of the treatment targets;
an exhaust gas treatment apparatus (30) configured to purify exhaust gas from the melting furnace (10);
a first heat recovery unit (40) configured to recover heat by supplying a heat medium to a cooling mechanism (9) configured to cool a furnace wall to avoid burn damage;
a recovery heat amount adjusting mechanism (80a) configured to adjust an amount of heat to be recovered by the first heat recovery unit (40);
a second heat recovery unit (50) configured to recover heat by supplying the heat medium to a low-temperature heat exchanger (50a) disposed downstream from the exhaust gas treatment apparatus (30);
a recovery heat amount adjusting mechanism (80b) configured to adjust an amount of heat to be recovered by the second heat recovery unit (50); and
a circulation passage (70) through which the heat medium used for recovering heat by the first heat recovery unit (40) and the second heat recovery unit (50) is circulated and supplied to a heat utilizing facility (200).

2. The melting system according to claim 1, the melting system further comprising a third heat recovery unit (60) configured to recover heat by supplying the heat medium to a high-temperature heat exchanger (60a) between the melting furnace (10) and the exhaust gas treatment apparatus (30); and
a recovery heat amount adjusting mechanism (80c) configured to adjust an amount of heat to be recovered by the third heat recovery units (60), and
wherein the recovery heat amount adjusting mechanism (80a, 80b, 80c) further adjusts an amount of heat to be recovered by each of the heat recovery units (40, 50, 60).

3. The melting system according to claim 1 or 2, the melting system further comprising a heat medium storage unit in the circulation passage (70), the heat medium storage unit (70d) being configured to temporarily store the heat medium.

4. The melting system according to any one of claims 1 to 3, the melting system further comprising a heat source apparatus configured to supply heat to the heat medium or dissipate heat of the heat medium.

5. The melting system according to claim 4, wherein the heat utilizing facility (200) comprises a treatment target dryer configured to dry a treatment target to be melted in the melting furnace (10).

6. The melting system according to claim 4,
wherein the treatment target dryer comprises a facility configured to dry sludge generated in a wastewater treatment facility configured to treat wastewater and subjected to solid-liquid separation, and
wherein the heat source apparatus comprises a combustor configured to burn combustible gas as fuel generated in the wastewater treatment facility.

7. The melting system according to claim 6, wherein the heat source apparatus comprises a drying heat exchanger employing, as a heating source, exhaust gas from the combustor configured to burn the combustible gas as fuel generated in the wastewater treatment facility.

8. The melting system according to claim 4,
wherein the treatment target dryer comprises a facility configured to dry sludge generated in a wastewater treatment facility configured to treat wastewater and subjected to solid-liquid separation, and
wherein the melting furnace is configured to burn combustible gas as fuel generated in the wastewater treatment facility.

9. The melting system according to any one of claims 1 to 8, the melting system further comprising a fourth heat recovery unit (90) configured to supply combustion air for the melting furnace (10) to a high-temperature heat exchanger (60b) between the melting furnace (10) and the exhaust gas treatment apparatus (30) to preheat the combustion air,
wherein the combustion air preheated in the fourth heat recovery unit (90) is supplied to the melting furnace (10).

10. The melting system according to any one of claims 1 to 9,
wherein a liquid is used as the heat medium, and
wherein the amount of heat to be recovered by each of the heat recovery units is adjusted so that a temperature of the heat medium after heat recovery is lower than a boiling point of the liquid.

11. A method for controlling a melting system comprising, in the melting system comprising:
a melting facility comprising:
a melting furnace (10) used for melting treatment targets such as waste and reducing the volume of the treatment targets; and
an exhaust gas treatment apparatus (30) configured to purify exhaust gas from the melting furnace (10);
a first heat recovery unit (40) configured to recover heat by supplying a heat medium to a cooling mechanism (9) configured to cool a furnace wall to avoid burn damage;
a second heat recovery unit (50) configured to recover heat by supplying the heat medium to a low-temperature heat exchanger (50a) disposed downstream from the exhaust gas treatment apparatus (30); and
a circulation passage (70) through which the heat medium used for recovering heat by the first heat recovery unit (40) and the second heat recovery unit (50) is circulated and supplied to a heat utilizing facility (200), wherein
adjusting a flow rate of the heat medium supplied to each of the heat recovery units (40, 50) so that an amount of heat to be recovered by the first heat recovery unit (40) is equal to or more than an amount of recovered heat required for cooling the furnace wall of the melting furnace (10).

12. The method for controlling a melting system according to claim 11,
wherein a liquid is used as the heat medium, and
wherein an amount of heat to be recovered by each of the heat recovery units (40, 50) is adjusted so that a temperature of the heat medium after heat recovery is lower than a boiling point of the liquid.

13. The method for controlling a melting system according to claim 11 or 12, wherein the flow rate of the heat medium supplied to each of the heat recovery units (40, 50) is adjusted so that an amount of heat to be recovered by the heat medium is equal to an amount of heat required in the heat utilizing facility (200).

14. The method for controlling a melting system according to any one of claims 11 to 13,
wherein the melting system further comprises a third heat recovery unit (60) configured to recover heat by supplying the heat medium to a high-temperature heat exchanger (60a) between the melting furnace (10) and the exhaust gas treatment apparatus (30), and
wherein the flow rate of the heat medium supplied to each of the heat recovery units (40, 50, 60) is adjusted so that an amount of heat to be recovered by the heat medium is equal to an amount of heat required in the heat utilizing facility (200).

15. The method for controlling a melting system according to any one of claims 11 to 14,
wherein the melting system further comprises a fourth heat recovery unit (90) configured to supply combustion air for the melting furnace (10) to a high-temperature heat exchanger (60b) between the melting furnace (10) and the exhaust gas treatment apparatus (30) to preheat the combustion air.

16. The method for controlling a melting system according to any one of claims 11 to 15,
wherein the melting system further comprises a heat source apparatus configured to supply heat to the heat medium or dissipate heat of the heat medium, and
wherein the heat source apparatus is controlled so that an amount of heat required in the heat utilizing facility (200) is supplied in a case where an amount of heat supplied is more or less than the amount of heat required in the heat utilizing facility (200).

17. The method for controlling a melting system according to claim 16,
wherein the melting facility is configured to melt sludge generated in a wastewater treatment facility configured to treat wastewater and subjected to solid-liquid separation, the heat utilizing facility (200) comprises a sludge dryer being provided with a combustor configured to burn combustible gas as fuel generated in the wastewater treatment facility, and the combustor functions as the heat source apparatus, and
wherein the combustor is ignited as a drying heat source in a case where an amount of heat to be recovered by the heat recovery units is less than the amount of heat required in the heat utilizing facility (200).

## Patentansprüche

1. Schmelzsystem, umfassend:
einen Schmelzofen (10), der zum Schmelzen von Behandlungszielen wie zum Beispiel Abfall und zum Reduzieren des Volumens der Behandlungsziele verwendet wird;
ein Abgasbehandlungsgerät (30), das dazu konfiguriert ist, Abgas von dem Schmelzofen (10) zu reinigen;
eine erste Wärmerückgewinnungseinheit (40), die dazu konfiguriert ist, Wärme zurückzugewinnen, indem ein Wärmemedium zu einem Kühlmechanismus (9) zugeführt wird, der dazu konfiguriert ist, eine Ofenwand zu kühlen, um einen Brennschaden zu vermeiden;
einen Rückgewinnungswärmemengeeinstellmechanismus (80a), der dazu konfiguriert ist, eine Menge der durch die erste Wärmerückgewinnungseinheit (40) zurückzugewinnenden Wärme einzustellen;
eine zweite Wärmerückgewinnungseinheit (50), die dazu konfiguriert ist, Wärme zurückzugewinnen, indem das Wärmemedium zu einem Niedertemperaturwärmetauscher (50a) zugeführt wird, der stromabwärts von dem Abgasbehandlungsgerät (30) angeordnet ist;
einen Rückgewinnungswärmemengeeinstellmechanismus (80b), der dazu konfiguriert ist, eine Menge einer durch die zweite Wärmerückgewinnungseinheit (50) zurückzugewinnenden Wärme einzustellen; und
einen Zirkulationsdurchgang (70), durch den das Wärmemedium, das zur Rückgewinnung von Wärme durch die erste Wärmerückgewinnungseinheit (40) und die zweite Wärmerückgewinnungseinheit (50) verwendet wird, zirkuliert und zu einer Wärme verwendenden Einrichtung (200) zugeführt wird.

2. Schmelzsystem nach Anspruch 1, wobei das Schmelzsystem ferner eine dritte Wärmerückgewinnungseinheit (60) umfasst, die dazu konfiguriert ist, Wärme zurückzugewinnen, indem das Wärmemedium zu einem Hochtemperaturwärmetauscher (60a) zwischen dem Schmelzofen (10) und dem Abgasbehandlungsgerät (30) zugeführt wird; und
einen Rückgewinnungswärmemengeeinstellmechanismus (80c), der dazu konfiguriert ist, eine Menge einer durch die dritte Wärmerückgewinnungseinheit (60) zurückzugewinnenden Wärme einzustellen, und
wobei der Rückgewinnungswärmemengeeinstellmechanismus (80a, 80b, 80c) ferner eine Menge von Wärme einstellt, die durch jede von den Wärmerückgewinnungseinheiten (40, 50, 60) zurückzugewinnen ist.

3. Schmelzsystem nach Anspruch 1 oder 2, wobei das Schmelzsystem ferner eine Wärmemediumspeichereinheit in dem Zirkulationsdurchgang (70) umfasst, wobei die Wärmemediumspeichereinheit (70d) dazu konfiguriert ist, temporär das Wärmemedium zu speichern.

4. Schmelzsystem nach einem der Ansprüche 1 bis 3, wobei das Schmelzsystem ferner ein Wärmequellengerät umfasst, dass dazu konfiguriert ist, Wärme zu dem Wärmemedium zuzuführen oder Wärme des Wärmemediums abzuführen.

5. Schmelzsystem nach Anspruch 4, wobei die Wärme verwendende Einrichtung (200) einen Behandlungszieltrockner umfasst, der dazu konfiguriert ist, ein in dem Schmelzofen (10) zu schmelzendes Behandlungsziel zu trocknen.

6. Schmelzsystem nach Anspruch 4,
wobei der Behandlungszieltrockner eine Einrichtung umfasst, die dazu konfiguriert ist, Schlamm zu trocknen, der in einer Abwasserbehandlungseinrichtung erzeugt wird, die dazu konfiguriert ist, Abwasser zu behandeln, und einer Fest-Flüssig-Separation unterzogen wird, und
wobei das Wärmequellengerät einen Verbrenner umfasst, der dazu konfiguriert ist, brennbares Gas als Treibstoff zu verbrennen, der in der Abwasserbehandlungseinrichtung erzeugt wird.

7. Schmelzsystem nach Anspruch 6, wobei das Wärmequellengerät einen Trocknungshitzetauscher umfasst, der als eine Wärmequelle Abgas von dem Verbrenner verwendet, der dazu konfiguriert ist, das brennbare Gas als Brennstoff zu verbrennen, der in der Abwasserbehandlungseinrichtung erzeugt wird.

8. Schmelzsystem nach Anspruch 4,
wobei der Behandlungszieltrockner eine Einrichtung umfasst, die dazu konfiguriert ist, Schlamm zu trocknen, der in einer Abwasserbehandlungseinrichtung erzeugt wird, die dazu konfiguriert ist, Abwasser zu behandeln, und einer Fest-Flüssig-Separation unterzogen wird, und
wobei der Schmelzofen dazu konfiguriert ist, brennbares Gas als Treibstoff zu verbrennen, der in der Abwasserbehandlungseinrichtung erzeugt wird.

9. Schmelzsystem nach einem der Ansprüche 1 bis 8, wobei das Schmelzsystem ferner eine vierte Wärmerückgewinnungseinheit (90) umfasst, die dazu konfiguriert ist, Verbrennungsluft für den Schmelzofen (10) zu einem Hochtemperaturwärmetauscher (60b) zwischen dem Schmelzofen (10) und dem Abgasbehandlungsgerät (30) zum Vorheizen der Verbrennungsluft zuzuführen,
wobei die in der vierten Wärmerückgewinnungseinheit (90) vorgeheizte Verbrennungsluft dem Schmelzofen (10) zugeführt wird.

10. Schmelzsystem nach einem der Ansprüche 1 bis 9,
wobei eine Flüssigkeit als das Wärmemedium verwendet wird, und
wobei die durch jede von den Wärmerückgewinnungseinheiten zurückzugewinnende Menge von Wärme derart eingestellt ist, dass eine Temperatur des Wärmemediums nach der Wärmerückgewinnung niedriger ist als ein Siedepunkt der Flüssigkeit.

11. Verfahren zur Steuerung eines Schmelzsystems, umfassend in dem Schmelzsystem:
eine Schmelzeinrichtung, umfassend:
einen Schmelzofen (10), der zum Schmelzen von Behandlungszielen wie zum Beispiel Abfall und zum Reduzieren des Volumens der Behandlungsziele verwendet wird; und
ein Abgasbehandlungsgerät (30), das dazu konfiguriert ist, Abgas von dem Schmelzofen (10) zu reinigen;
eine erste Wärmerückgewinnungseinheit (40), die dazu konfiguriert ist, Wärme zurückzugewinnen, indem ein Wärmemedium zu einem Kühlmechanismus (9) zugeführt wird, der dazu konfiguriert ist, eine Ofenwand zu kühlen, um einen Brennschaden zu vermeiden;
eine zweite Wärmerückgewinnungseinheit (50), die dazu konfiguriert ist, Wärme zurückzugewinnen, indem das Wärmemedium zu einem Niedrigtemperaturwärmetauscher (50a) zugeführt wird, der stromabwärts von dem Abgasbehandlungsgerät (30) angeordnet ist; und
einen Zirkulationsdurchgang (70), durch den das Wärmemedium, das zur Rückgewinnung von Wärme durch die erste Wärmerückgewinnungseinheit (40) und die zweite Wärmerückgewinnungseinheit (50) verwendet wird, zirkuliert und zu einer Wärme verwendenden Einrichtung (200) zugeführt wird, wobei
eine Fließrate des Wärmemediums, das zu jeder von den Wärmerückgewinnungseinheiten (40, 50) zugeführt wird, derart eingestellt wird, dass eine durch die erste Wärmerückgewinnungseinheit (40) zurückzugewinnende Menge von Wärme größer oder gleich einer Menge von zurückgewonnener Wärme ist, die zum Kühlen der Ofenwand des Schmelzofens (10) erforderlich ist.

12. Verfahren zur Steuerung eines Schmelzsystems nach Anspruch 11,
wobei eine Flüssigkeit als das Wärmemedium verwendet wird, und
wobei eine durch jede von den Wärmerückgewinnungseinheiten (40, 50) zurückzugewinnende Menge von Wärme derart eingestellt wird, dass eine Temperatur des Wärmemediums nach der Wärmerückgewinnung niedriger ist als ein Siedepunkt der Flüssigkeit.

13. Verfahren zur Steuerung eines Schmelzsystems nach Anspruch 11 oder 12, wobei die Fließrate des Wärmemediums, das zu jeder von den Wärmerückgewinnungseinheiten (40, 50) zugeführt wird, derart eingestellt wird, dass eine durch das Wärmemedium zurückzugewinnende Wärmemenge gleich einer Wärmemenge ist, die in der Wärme verwendenden Einrichtung (200) benötigt wird.

14. Verfahren zur Steuerung eines Schmelzsystems nach einem der Ansprüche 11 bis 13,
wobei das Schmelzsystem ferner eine dritte Wärmerückgewinnungseinheit (60) umfasst, die dazu konfiguriert ist, Wärme zurückzugewinnen, indem das Wärmemedium zu einem Hochtemperaturwärmetauscher (60a) zwischen dem Schmelzofen (10) und dem Abgasbehandlungsgerät (30) zugeführt wird, und
wobei die Fließrate des Wärmemediums, das zu jeder von den Wärmerückgewinnungseinheiten (40, 50, 60) zugeführt wird, derart eingestellt wird, dass eine durch das Wärmemedium zurückzugewinnende Wärmemenge gleich einer Wärmemenge ist, die in der Wärme verwendenden Einrichtung (200) benötigt wird.

15. Verfahren zur Steuerung eines Schmelzsystems nach einem der Ansprüche 11 bis 14,
wobei das Schmelzsystem ferner eine vierte Wärmerückgewinnungseinheit (90) umfasst, die dazu konfiguriert ist, Verbrennungsluft für den Schmelzofen (10) zu einem Hochtemperaturwärmetauscher (60b) zwischen dem Schmelzofen (10) und dem Abgasbehandlungsgerät (30) zuzuführen, um die Verbrennungsluft vorzuheizen.

16. Verfahren zur Steuerung eines Schmelzsystems nach einem der Ansprüche 11 bis 15,
wobei das Schmelzsystem ferner ein Wärmequellengerät umfasst, das dazu konfiguriert ist, Wärme zu dem Wärmemedium zuzuführen oder Wärme des Wärmemediums abzuführen, und
wobei das Wärmequellengerät derart gesteuert wird, dass eine Wärmemenge, die in der Wärme verwendenden Einrichtung (200) benötigt wird, in einem Fall zugeführt wird, wo eine zugeführte Wärmemenge mehr oder weniger als die Wärmemenge ist, die in der Wärme verwendenden Einrichtung (200) benötigt wird.

17. Verfahren zur Steuerung eines Schmelzsystems nach Anspruch 16,
wobei die Schmelzeinrichtung dazu konfiguriert ist, Schlamm zu schmelzen, der in einer Abwasserbehandlungseinrichtung erzeugt wird, die dazu konfiguriert ist, Abwasser zu behandeln, und einer Fest-Flüssig-Separation unterzogen wird, wobei die Wärme verwendende Einrichtung (200) einen Schlammtrockner umfasst, der mit einem Verbrenner versehen ist, der dazu konfiguriert ist, brennbares Gas als Brennstoff zu verbrennen, der in der Abwasserbehandlungseinrichtung erzeugt wird, und wobei der Verbrenner als das Wärmequellengerät fungiert, und
wobei der Verbrenner als eine Trocknungswärmequelle in einem Fall gezündet wird, wo eine durch die Wärmerückgewinnungseinheiten zurückzugewinnende Wärmemenge kleiner ist als die Wärmemenge, die in der Wärme verwendenden Einrichtung (200) benötigt wird.

## Revendications

1. Système de fusion comprenant:
un four de fusion (10) utilisé pour fondre les objectifs de traitement tels que les déchets et réduire le volume des objectifs de traitement:
un appareil de traitement des gaz d'échappement (30) configuré pour purifier les gaz d'échappement du four de fusion (10);
une première unité de récupération de chaleur (40) configurée pour récupérer de la chaleur en fournissant un fluide caloporteur à un mécanisme de refroidissement (9) configuré pour refroidir la paroi d'un four afin d'éviter les dommages causés par les cloisons;
un mécanisme de réglage de la quantité de chaleur récupérée (80a) configuré pour régler une quantité de chaleur à récupérer par la première unité de récupération de chaleur (40);
une deuxième unité de récupération de chaleur (50) configurée pour récupérer la chaleur en fournissant le fluide caloporteur à un échangeur de chaleur à basse température (50a) disposé en aval de l'appareil de traitement des gaz d'échappement (30);
un mécanisme de réglage de la quantité de chaleur de récupération (80b) configuré pour régler une quantité de chaleur à récupérer par la deuxième unité de récupération de chaleur (50); et
un passage de circulation (70) par lequel le fluide caloporteur utilisé pour la récupération de la chaleur par la première unité de récupération de la chaleur (40) et la deuxième unité de récupération de la chaleur (50) est mis en circulation et fourni à une installation d'utilisation de la chaleur (200).

2. Système de fusion selon la revendication 1, le système de fusion comprenant en outre une troisième unité de récupération de chaleur (60) configurée pour récupérer de la chaleur en fournissant le milieu thermique à un échangeur de chaleur à haute température (60a) entre le four de fusion (10) et l'appareil de traitement des gaz d'échappement (30); et
un mécanisme d'ajustement de la quantité de chaleur de récupération (80c) configuré pour ajuster une quantité de chaleur à récupérer par les troisièmes unités de récupération de chaleur (60), et
dans lequel le mécanisme d'ajustement de la quantité de chaleur récupérée (80a, 80b, 80c) ajuste en outre une quantité de chaleur à récupérer par chacune des unités de récupération de chaleur (40, 50, 60).

3. Système de fusion selon les revendications 1 ou 2, le système de fusion comprenant en outre une unité de stockage de fluide thermique dans le passage de circulation (70), l'unité de stockage de fluide thermique (70d) étant configurée pour stocker temporairement le fluide thermique.

4. Système de fusion selon l'une quelconque des revendications 1 à 3, le système de fusion comprenant en outre un appareil de source de chaleur configuré pour fournir de la chaleur au milieu thermique ou dissiper la chaleur du milieu thermique.

5. Système de fusion selon la revendication 4, dans lequel l'installation d'utilisation de la chaleur (200) comprend un séchoir de cible de traitement configuré pour sécher une cible de traitement à fondre dans le four de fusion (10).

6. Système de fusion selon la revendication 4,
dans lequel le sécheur cible de traitement comprend une installation configurée pour sécher les boues générées dans une installation de traitement des eaux usées configurée pour traiter les eaux usées et soumise à une séparation solide-liquide, et
dans lequel l'appareil source de chaleur comprend un brûleur configuré pour brûler du gaz combustible comme combustible généré dans l'installation de traitement des eaux usées.

7. Système de fusion selon la revendication 6,
dans lequel l'appareil source de chaleur comprend un échangeur de chaleur de séchage utilisant, comme source de chaleur, les gaz d'échappement de la chambre de combustion configurée pour brûler le gaz combustible comme combustible généré dans l'installation de traitement des eaux usées.

8. Système de fusion selon la revendication 4,
dans lequel le sécheur cible de traitement comprend une installation configurée pour sécher les boues générées dans une installation de traitement des eaux usées configurée pour traiter les eaux usées et soumise à une séparation solide-liquide, et
dans lequel le four de fusion est configuré pour brûler du gaz combustible comme combustible généré dans l'installation de traitement des eaux usées.

9. Système de fusion selon l'une quelconque des revendications 1 à 8, le système de fusion comprenant en outre une quatrième unité de récupération de chaleur (90) configurée pour fournir de l'air de combustion pour le four de fusion (10) à un échangeur de chaleur à haute température (60b) entre le four de fusion (10) et l'appareil de traitement des gaz d'échappement (30) pour préchauffer l'air de combustion,
dans lequel l'air de combustion préchauffé dans la quatrième unité de récupération de chaleur (90) est fourni au four de fusion (10).

10. Système de fusion selon l'une quelconque des revendications 1 à 9,
dans lequel un liquide est utilisé comme milieu de chauffe, et
dans lequel la quantité de chaleur à récupérer par chacune des unités de récupération de chaleur est ajustée de telle sorte qu'une température du milieu thermique après récupération de chaleur soit inférieure à un point d'ébullition du liquide.

11. Procédé pour commander un système de fusion comprenant, dans le système de fusion comprenant:
une installation de fusion comprenant:
un four de fusion (10) utilisé pour fondre les objectifs de traitement tels que les déchets et réduire le volume des objectifs de traitement
un appareil de traitement des gaz d'échappement (30) configuré pour purifier les gaz d'échappement du four de fusion (10);
une première unité de récupération de chaleur (40) configurée pour récupérer de la chaleur en fournissant un fluide caloporteur à un mécanisme de refroidissement (9) configuré pour refroidir la paroi d'un four afin d'éviter les dommages causés par les cloisons;
une deuxième unité de récupération de chaleur (50) configurée pour récupérer de la chaleur en fournissant le milieu thermique à un échangeur de chaleur à basse température (50a) disposé en aval de l'appareil de traitement des gaz d'échappement (30); et
un passage de circulation (70) à travers lequel le milieu thermique utilisé pour récupérer de la chaleur par la première unité de récupération de chaleur (40) et la deuxième unité de récupération de chaleur (50) est mis en circulation et fourni à une installation d'utilisation de la chaleur (200), dans lequel
le réglage d'un débit du fluide caloporteur fourni à chacune des unités de récupération de chaleur (40, 50) de sorte qu'une quantité de chaleur à récupérer par la première unité de récupération de chaleur (40) soit égale ou supérieure à une quantité de chaleur récupérée nécessaire au refroidissement de la paroi du four de fusion (10).

12. Procédé de commande d'un système de fusion selon la revendication 11,
dans lequel un liquide est utilisé comme milieu de chauffe, et
dans lequel une quantité de chaleur à récupérer par chacune des unités de récupération de chaleur (40, 50) est ajustée de telle sorte qu'une température du milieu thermique après récupération de la chaleur soit inférieure à un point d'ébullition du liquide.

13. Procédé de commande d'un système de fusion selon la revendication 11 ou 12, dans lequel le débit du fluide caloporteur fourni à chacune des unités de récupération de chaleur (40, 50) est ajusté de telle sorte qu'une quantité de chaleur à récupérer par le fluide caloporteur soit égale à une quantité de chaleur requise dans l'installation d'utilisation de la chaleur (200).

14. Procédé de commande d'un système de fusion selon l'une des revendications 11 à 13,
dans lequel le système de fusion comprend en outre une troisième unité de récupération de chaleur (60) configurée pour récupérer de la chaleur en fournissant le milieu thermique à un échangeur de chaleur à haute température (60a) entre le four de fusion (10) et l'appareil de traitement des gaz d'échappement (30), et
dans lequel le débit du fluide caloporteur fourni à chacune des unités de récupération de chaleur (40, 50, 60) est ajusté de manière à ce qu'une quantité de chaleur à récupérer par le fluide caloporteur soit égale à une quantité de chaleur requise dans l'installation d'utilisation de la chaleur (200).

15. Procédé de commande d'un système de fusion selon l'une des revendications 11 à 14,
dans lequel le système de fusion comprend en outre une quatrième unité de récupération de chaleur (90) configurée pour fournir de l'air de combustion pour le four de fusion (10) à un échangeur de chaleur haute température (60b) entre le four de fusion (10) et l'appareil de traitement des gaz d'échappement (30) pour préchauffer l'air de combustion.

16. Procédé de commande d'un système de fusion selon l'une des revendications 11 à 15,
dans lequel le système de fusion comprend en outre un appareil de source de chaleur configuré pour fournir de la chaleur au milieu de chauffe ou dissiper la chaleur du milieu de chauffe, et
dans lequel l'appareil source de chaleur est contrôlé de manière à ce qu'une quantité de chaleur requise dans l'installation utilisant la chaleur (200) soit fournie dans le cas où une quantité de chaleur fournie est supérieure ou inférieure à la quantité de chaleur requise dans l'installation utilisant la chaleur (200).

17. Procédé de commande d'un système de fusion selon la revendication 16,
dans lequel l'installation de fusion est configurée pour faire fondre les boues générées dans une installation de traitement des eaux usées configurée pour traiter les eaux usées et soumise à une séparation solide-liquide, l'installation d'utilisation de la chaleur (200) comprend un séchoir à boues qui est muni d'une chambre de combustion configurée pour brûler le gaz combustible comme combustible généré dans l'installation de traitement des eaux usées, et la chambre de combustion fonctionne comme appareil de source de chaleur, et
dans lequel la chambre de combustion est allumée comme source de chaleur de séchage dans le cas où la quantité de chaleur à récupérer par les unités de récupération de chaleur est inférieure à la quantité de chaleur requise dans l'installation d'utilisation de la chaleur (200).
